# EUROPEAN PATENT APPLICATION

(11) **EP 4 575 581 A1**
(43) Date of publication of application: **25.06.2025**
(21) Application number: 23218093.5
(22) Date of filing: 19.12.2023
(51) Int. Cl.: G01S 19/30, G01S 19/32, G01S 19/42

(54) **METHOD FOR AIDING ACQUISITION OF A SATELLITE SIGNAL AND SATELLITE RECEIVER DEVICE**

(71) Applicant: u-blox AG, 8800 Thalwil (CH)
(72) Inventor: Echeverria, Eneko, 8800 Thalwil (CH); Dietterle, Daniel, 8800 Thalwil (CH); Huerlimann, Thomas, 8800 Thalwil (CH); Sampath, Manoj, 8800 Thalwil (CH); Kueng, Christof, 8800 Thalwil (CH); Varteva, Jaakko, 8800 Thalwil (CH); Shapira, Pavel, 8800 Thalwil (CH)
(74) Representative: Epping - Hermann - Fischer

(57) **Abstract**

The present disclosure relates to a method (300) for aiding acquisition of a satellite signal, comprising configuring, during a first signal acquisition phase (310) a first RF reception path (140) of a satellite receiver device (100) to receive a first type of satellite signal (232) broadcast by a first set of satellites using a first carrier frequency, wherein the first type of satellite signal (232) comprises ephemeris data of the first set of satellites, and configuring, during a second signal acquisition phase (320) based on synchronization information and/or ephemeris data obtained in the first signal acquisition phase (310), the first RF reception path (140) to receive a second type of satellite signal (234) broadcast by the first set of satellites using a second carrier frequency.

The present disclosure further relates to a corresponding satellite receiver device (100).

## Description

The present disclosure relates to a method for aiding acquisition of a satellite signal and a corresponding satellite receiver device.

A number of satellite-based navigation systems are currently in use. Known examples of Global Navigation Satellite Systems (GNSS) include the US-based Global Positioning System (GPS), Russia's Global Navigation Satellite System (GLONASS), China's Beidou Navigation Satellite System (BDS) and the Galileo system of the European Union. In addition, a number of further systems, global, regional, and national, are operating or under development, including Japan's Quasi-Zenith Satellite System (QZSS) and India's Indian Regional Navigation Satellite System (IRNSS) as well as regional Satellite-Based Augmentation Systems (SBAS).

In general, satellite-based navigation systems enable corresponding satellite navigation devices to determine their position and/or time based on signals broadcast by satellites of the GNSS. Such satellite navigation devices can operate independently from any local infrastructure and enable many applications, such as assisting drivers in navigation etc.

Satellite navigation is based on receiving navigation messages from a group of several satellites working together as a system, wherein said group is also referred to as a satellite constellation, like the previously mentioned examples of GNSS systems. Each satellite of the constellation provides navigation messages by means of a corresponding satellite signal, which allow a satellite receiver to determine the position of the satellite in orbit as well as the time when the respective signal was transmitted. The coding and information content of navigation messages depends on the specific GNSS system and type of satellite signal used. By combining information received from multiple satellites of a constellation, the receiver can determine its own position by computing its distance from the respective satellites and their known position in the orbit.

It is also possible to combine satellite signals received from different GNSS systems and corresponding satellite constellation for positioning, sometimes with improved accuracy. Moreover, most current GNSS systems transmit more than one type of navigation signal using different carrier frequencies and/or transmission bands. These different signals may relate to different application scenarios, precision levels and/or exist for historical reasons.

In principle, it would be desirable to capture information of as many satellite signals as possible to improve positioning by a satellite receiver device. However, in practice this may not be feasible due to hardware limits on receiving signals transmitted using different carrier frequencies, signal bands and/or modulation schemes. Moreover, receiving a large number of satellite signals may also result in an increased power demand of a multi-band or multi-channel satellite receiver.

It is an object of the present disclosure to provide improved methods for aiding acquisition of satellite signals with limited hardware resources. Among others, it is desirable to reduce the time to first fix (TTFF) of satellite receivers having a relatively low or limited number of reception paths. Moreover, it is desirable to enable a satellite receiver to obtain satellite signals faster, which are inherently difficult to receive due to their signal characteristics.

The present disclosure provides a method for aiding acquisition of a satellite signal. The method comprises the step of configuring, during a first signal acquisition phase, a first radio frequency (RF) reception path of a satellite receiver device to receive a first type of satellite signal broadcast by a first set of satellites using a first carrier frequency, wherein the first type of satellite signal comprises ephemeris data of the first set of satellites. The method further comprises the step of configuring, during a second signal acquisition phase based on synchronization information and/or the ephemeris data obtained in the first signal acquisition phase, the first RF reception path to receive a second type of satellite signal broadcast by the first set of satellites using a second carrier frequency.

Among others, the inventors have found out that information obtained in a first signal acquisition phase can be reused in a second, subsequent signal acquisition phase, provided that the corresponding first and second type of satellite signals are broadcast by the same set of satellites. In particular, if a first RF reception path has already been used to receive a first type of satellite signal from the first set of satellites, obtained synchronization information may be reused to speed up reception of a second type of satellite signal from the same satellite using the same reception path. Alternatively or in addition, ephemeris data obtained during a first signal acquisition phase may be reused in a second acquisition phase for acquiring the second type of satellite signal. This process may be referred to as aiding.

The above approach is partly based on the insight that the two types of signals are transmitted using a common reference clock of the same satellite, i.e., at the same time and from the same position in orbit.

The above re-use of synchronization information and/or ephemeris data is particularly useful in situations, where it is more difficult, due to the nature of the respective signal characteristics, to acquire the second type of signal, compared with the effort for acquiring the first type of signal. For example, in the Beidou GNSS, the cold start sensitivity and TTFF for the so-called B1C signal is significantly worse than for the so-called B1I signal. Thus, configuring a satellite receiver to briefly receive the B1I signal and subsequently switching the satellite receiver to acquire the B1C signal may reduce the overall time required to successfully decode the B1C signal.

The reception of the first type of satellite signal, e.g., the B1I signal, is only temporary. The first RF path for reception of the first type of satellite signal becomes available for the second type of satellite signal, in particular reception of the B1C signal, later.

Optionally, the method further comprises configuring a second RF reception path to receive a further type of satellite signal broadcast by the first or second set of satellites using a further carrier frequency, wherein the second reception path operates independently of the first RF reception path. By using two independent RF reception paths, two different types of satellite signals can be received in parallel, making more information available to the satellite receiver device and thus improving its performance.

Optionally, if the further type of satellite signal is broadcast by the first set of satellites, the synchronization information and/or the ephemeris data obtained in the first signal acquisition phase is used by the second RF reception path as it becomes available. Similar to the second type of satellite signal received by the same RF reception path after receiving the first type of satellite signal, at least some of the information obtained by the first RF reception path may also be reused by a second RF reception path, provided that the further type of satellite signal is broadcast by the same set of satellites. In particular, synchronization information of a transmitter circuit of a satellite or ephemeris data of the first set of satellites may be reused to accelerate signal acquisition of the further type of satellite signal.

Optionally, the first signal acquisition phase ends when the first RF reception path has successfully acquired the first type of satellite signal and has received ephemeris data for at least a predetermined number of satellites. The ephemeris data is primarily used for aiding the acquisition of the second or a further type of satellite signal. Accordingly, as soon as this data is available, the first RF reception path can stop receiving the first type of satellite signal, thereby freeing the first RF reception path for receiving the second type of satellite signal. For example, the satellite receiver device may receive ephemeris data of at least four satellites of a constellation transmitting both the first and second type of satellite signals.

Optionally, the method further comprises computing and outputting a first position output based on information contained in the first type of satellite signal received in the first signal acquisition phase and, thereafter, continuously computing and outputting further position outputs based on information contained in at least one other type of satellite signal. The first type of satellite signal may be used to obtain an initial position of the satellite receiver device, i.e., to calculate a first position solution or first fix. As soon as such an initial, potentially less accurate, position of the receiver device is available, the satellite receiver device may continue to determine its position, potentially with increased accuracy, using the second type of satellite signal.

For example, the first position may be used by a positioning algorithm used in the second signal acquisition phase for initialization. Subsequent position updates provided by the positioning algorithm are based on navigation messages contained in the at least one other type of satellite signal, for example the second type of satellite signal received by the same RF reception path, or a further type of satellite signal received by a second RF reception path.

Optionally, the first type of satellite signal and the second type of satellite signal are transmitted in the same transmission band, such as the L1 band. If the first type of satellite signal and the second type of satellite signal are transmitted in the same transmission band, it may be easier and hence faster for the first radio reception path to switch between the first and the second type of satellite signal. Moreover, similar signal distortions and hence transmissions errors may be applicable to both satellite signals, potentially further simplifying the reuse of the synchronization information and/or the ephemeris data.

The present disclosure further provides a satellite receiver device. The satellite receiver device comprises a receiver circuit configured to receive satellite signals, and at least one processing device. The at least one processing device is configured to perform the following operations to aid signal acquisition: configure, during a first signal acquisition phase, the receiver circuit to receive a first type of satellite signal broadcast by a first set of satellites using a first carrier frequency, wherein the first type of satellite signal comprises ephemeris data of the first set of satellites; and configure, during a second signal acquisition phase based on synchronization information and/or the ephemeris data obtained in the first signal acquisition phase, the receiver circuit to receive a second type of satellite signal broadcast by the first set of satellites using a second carrier frequency.

The working principles and advantages of the satellite receiver device correspond to the respective principles and advantages discussed above with regard to the method for aiding acquisition of a satellite signal.

Optionally, the at least one processing device is configured to store the synchronization information and/or the ephemeris data obtained in the first signal acquisition phase for use in the second signal acquisition phase. Alternatively or in addition, the receiver circuit is configured to maintain a synchronization state, in particular of a phase-locked loop (PLL), acquired in the first signal acquisition phase for the second signal acquisition phase. For example, a higher-level algorithm may read and store data obtained in the first signal acquisition phase and provide it as initial values for a corresponding algorithm used in the second signal acquisition phase. Alternatively or in addition, low level hardware components, such as a PLL of the receiver circuit, may simply maintain their current operating state, thereby aiding signal acquisition in the second sequence phase.

Optionally, the at least one processing device is configured to switch the receiver circuit from the first carrier frequency to the second carrier frequency when the receiver circuit has acquired the first type of satellite signal and the satellite receiver device has received ephemeris data for a predetermined number of satellites. At least at this stage, the satellite receiver device has obtained sufficient information to enable an accelerated signal acquisition of the second type of satellite signal.

Optionally, the at least one processing device is further configured to switch the receiver circuit from the first carrier frequency to the second carrier frequency after a predetermined amount of time regardless of its synchronization state. Such a mechanism may be implemented to avoid a deadlock situation in case the first type of satellite signal cannot be successfully received or decoded, for example due to signal disturbances affecting the first carrier frequency and/or other problems in transmitting, receiving, or decoding the first type of satellite signal.

Optionally, the at least one processing device is configured to implement a positioning engine, and the step of configuring the receiver circuit to receive the second type of satellite signal is performed when the positioning engine obtains at least time, position and satellite orbit data, and the positioning engine uses the time, position and satellite orbit data obtained in the first signal acquisition phase during the second signal acquisition phase. Rather than restarting positioning using the second type of signals anew, time, position and satellite orbit data obtained in the first stage may be used to initialize the positioning engine in the second acquisition phase.

Optionally, the satellite receiver device is a two-band receiver. A first receiver circuit of the two-band receiver is configured by the at least one processing device to successively receive the first type of satellite signal and the second type of satellite signal. The first type of satellite signal and the second type of satellite signal are broadcast by the first set of satellites in a first transmission band. The second receiver circuit of the two-band receiver is configured by the at least one processing device to independently receive a further type of satellite signal broadcast by the first or a second set of satellites using a further carrier frequency of the first transmission band or a second transmission band. As detailed above, such a two-band receiver enables multiple satellite signals to be tracked in parallel, thereby enabling an improved positioning accuracy and/or to implement other advanced features of the satellite receiver device.

Optionally, the first type of satellite signal has a lower code length than the second type of satellite signal. The code length of a satellite signal to be acquired has a significant impact on the cold start sensitivity of a corresponding receiver circuit. In other words, it is significantly easier and faster to successfully detect and decode a signal having a lower code length compared to a satellite signal having a higher code length.

For example, in the Beidou satellite navigation system, the B1I signal has a code length of 2046 chips, whereas the B1C signal has a code length of 10230 chips. Accordingly, it may be easier to synchronize a satellite receiver circuit first with the B1I signal, before using synchronization information and/or ephemeris data obtained from the B1I signal to acquire the higher code length and/or higher bandwidth B1C signal, e.g., switch from the 4.092 MHz bandwidth B1I signal to the 32.736 MHz bandwidth B1C signal.

Optionally, the GNSS is configured to provide regional coverage using at least one satellite in a geostationary earth orbit (GEO) and/or in an inclined geo-synchronous orbit (IGSO), in particular the Beidou navigation satellite system. In such a GNSS, different types of satellite signals are typically transmitted via the same set of navigation satellites, thereby enabling fast signal acquisition as described above. For example, both the B1I and B1C signals of the Beidou navigation satellite system are transmitted on at least some of the IGSO satellites.

Optionally, the first and second signal acquisition phases are performed when the satellite receiver device is powered on, after a request for a cold start and/or during signal re-acquisition. In all these situations, the above methods and devices are useful to accelerate the TTFF.

While the concepts underlying the present disclosure have been partly described with respect to a signal acquisition method and partly with respect to a satellite receiver device, the respective advantages can be achieved in either embodiment. Accordingly, all implementation details and advantages described above and below are equally applicable to the claimed method and device, as well as any system.

In the following, various exemplary methods and devices will be described with respect to the attached figures. While specific examples are described, the disclosed examples are not meant to limit the scope of the present disclosure, which is determined by the attached set of claims.
Figure 1 shows, in a schematic manner, the configuration of an exemplary satellite receiver device.
Figure 2 shows, in a schematic manner, an overview of commonly used GNSS frequency bands and signals.
Figure 3 shows, in a schematic manner, steps of a method for aiding acquisition of a satellite signal.

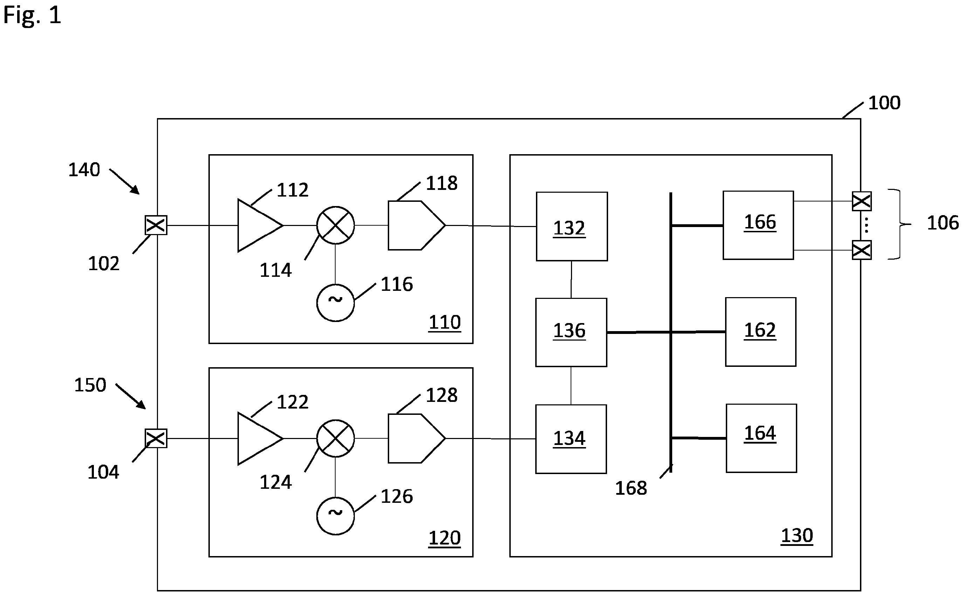

Figure 1 shows, in a schematic manner, the configuration of a satellite receiver device 100 adapted for receiving satellite signals from a plurality of satellites. In the described example, the satellite receiver device 100 is a GNSS receiver. However, it is noted that the disclosed method and circuits may also be used for other types of satellite receiver devices configured to receive different types of satellite signals.

The satellite receiver device 100 comprises a first receiver circuit 110, a second receiver circuit 120 and a digital signal processing part 130. Although not shown in Figure 1, the satellite receiver device 100 may comprise further subcomponents, such as analog or digital circuit components configured for providing a supply voltage, a real-time reference clock or other clock signals. Similarly, the satellite receiver device 100 may comprise fewer or further receiver circuits. Accordingly, the exemplary design shown in Figure 1 is not intended to be limiting for the present disclosure.

The first receiver circuit 110 receives a first RF input signal from a first antenna pin 102. The signal received from the antenna pin 102 is amplified by a first signal amplifier 112 and demodulated by a first signal demodulator 114. The signal demodulator 114 receives a reference RF signal from a first phase-locked loop (PLL) 116 for demodulating the received RF signal. The output of the first signal demodulator 114 is provided to a first analog-to-digital converter (ADC) 118 for generating a corresponding first digital, intermediate frequency (IF) signal, which is output to the digital signal processing part 130.

Correspondingly, the second receiver circuit 120 receives a second RF signal from a second antenna pin 104, and amplifies, demodulates, and digitizes said signal using a second signal amplifier 122, a second signal demodulator 124, a second PLL 126 and a second ADC 128 to provide a second digital IF signal.

Attention is drawn to the fact that the description of the first receiver circuit 110 and the corresponding second receiver circuit 120 serves as an example only and may be modified depending, for example, on the specific type of received signal and decoder circuitry. Accordingly, other types of receiver circuit known to the skilled person may be employed in the satellite receiver device 100.

The digital signal processing part 130 according to the disclosed example comprises a first intermediate frequency pre-processor (IFPP) circuit 132, a second IFPP circuit 134 and a GNSS engine 136. The first and second IFPP circuits 132 and 134 may perform at least some of the following tasks: splitting of the first and second digital IF digital signal, e.g., L1 frequency band and the L5 band, into desired sub-bands or signals, e.g., GPS L1, GLONASS L1, Beidou B1I signal, and GPS L5, GLONASS L5, Beidou B2a signal, respectively; reduction of a sampling rate for a correlation or GNSS engine 136; and/or filtering out of interferences. The GNSS engine 136 receives the signals preprocessed by the circuits 132 and 134, respectively. For example, the GNSS engine may receive a first baseband (BB) navigation satellite signal received using the first receiver circuit 110 and a second BB navigation satellite signal received via the second receiver circuit 120. In the specific example, the IFPP circuits 132 and 134 may perform signal processing in the digital domain, such as converting the received IF digital signals to the BB domain. However, in other implementations, this signal processing may be performed directly in the analog domain, by the GNSS engine 136, or may be omitted completely.

Attention is drawn to the fact that the processing chain starting at the first antenna pin 102 and ending in the first IFPP circuit 132 implements a first RF signal reception path 140, which operates completely independent from a corresponding second RF signal reception path 150 starting at the second antenna pin 104 and ending at the second IFPP circuit 134. Accordingly, the satellite receiver device 100 and its GNSS engine 136 can independently track and process signals transmitted by up to two different sets of satellite signals in parallel.

In a signal acquisition phase, the receiver circuit 110 is searching for the received signal within a search space spanning a frequency spectrum and a code phase shift, e.g., for GPS L1 signal with 20kHz (frequency bandwidth around the carrier frequency) and 1023 chips. The search space is determined, amongst others, based on the properties of the received signal and preferably on the calculated, estimated and/or predetermined distortions for this signal.

Note that the analog circuitry of the receiver circuit 110 and 120 is processing the RF satellite signals from all satellites that are broadcasting in the respective receiver band in parallel and converts the analog signals into digital form. The digital signal processing part 130 of the satellite receiver device 100 then extracts the transmitted data from the many satellites by synchronizing on the data, i.e., it performs signal acquisition, and decodes the data. It does so for many data streams in parallel, using appropriate an appropriate channel access method, such as code-division multiple access (CDMA). Accordingly, in the described embodiment, at least part of the synchronization is performed in the digital domain.

In the disclosed implementation, the GNSS engine 136 is implemented as a function specific signal processing circuit configured for processing BB signals received from the first and second IFPP circuits 132 and 134. However, in other designs, the GNSS engine 136 may be implemented as a software algorithm running on a generic processing device, such as a CPU.

The digital signal processing part 130 further comprises a central processing unit (CPU) 162, a memory 164 and interface circuitry 166. The CPU 162 may be configured to load and execute program instructions stored in the memory 164 for controlling the satellite receiver device 100. In particular, the CPU 132 may execute program code to configure the GNSS engine 136 as well as the first and second receiver circuits 110 and 120 as further described below.

Moreover, the CPU 162 may receive further data and control signals from input/output (I/O) pins 106 of the satellite receiver device 100 by means of the interface circuit 166. Such signals may be relatively low level, hardware control signals received or output via corresponding general programming I/O (GPIO) pins or may represent higher level data signals received over one or more corresponding bus systems, such as a I2C, SPI or UART bus.

As shown in Figure 1, the GNSS engine 136, the CPU 162, the memory 164 and the interface circuit 166 are interconnected by means of one or more bus systems 168. Of course, other system architectures and connection topologies are also possible. Moreover, while most of the signal processing described below takes part in the digital domain in the described example, at least some of the signal processing may also be performed by corresponding analog circuits.

In the following, processing steps are described, which may be performed by the CPU 162 and/or the GNSS engine 136 as well as further components of the satellite receiver device 100 not shown in Figure 1. The following description is based on specific satellite signals used in the Beidou GNSS system. However, attention is drawn to the fact that the disclosed methods and devices may also be applicable to other GNSS systems, and in particular to satellite receiver devices configured to receive signals from more than one GNSS satellite constellation.

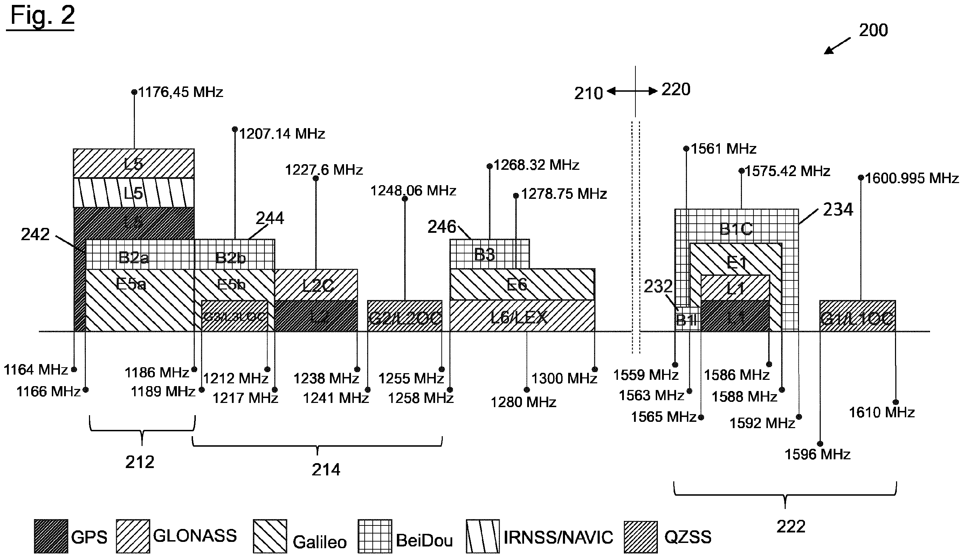

Figure 2 shows an overview of commonly used GNSS frequency bands of various known GNSS systems. On a high level, the available RF frequency space 200 is divided into lower bands 210 and upper bands 220. As indicated in Figure 2, the lower bands 210 currently cover frequencies of 1164 MHz and 1300 MHz. In contrast, the upper bands 220 currently cover frequencies between 1559 MHz and 1610 MHz. The lower bands 210 and the upper bands 220 may be further subdivided into individual bands, such as the so-called L5 band 212 between 1164 MHz and 1189 MHz, the so-called L2 band 214 between 1186 MHz and 1255 MHz and the so-called L1 band 222 between 1559 MHz and 1610 MHz. Further transmission bands, such as the so-called L6 band between 1258 MHz and 1300 MHz, and sub-bands exist but are not shown in Figure 2 and/or discussed in detail here.

Concerning the Beidou satellite transmission system in particular, attention is drawn to the fact that the L1 transmission band 222 is used to transmit two different types of satellite signals, namely the B1I satellite signal 232 centered around a carrier frequency of 1561 MHz as well as the B1C signal 234 centered around a carrier frequency of 1575.42 MHz. Note that the two signals 232 and 234 are partially overlapping in the frequency domain, and both fall within the L1 band 222. Further attention is drawn to the fact that the central frequency of the B1C signal 234 corresponds to the carrier frequency of the so-called E1 signal used by Galileo as well as the so-called L1 signals used by GLONASS and GPS satellite GNSS systems, respectively. In contrast, the B1I signal 232 has an offset carrier frequency arranged closer to the lower boundary of the L1 band 222 and is not co-located with any other type of the GNSS signals shown in Figure 2.

Both of the B1I and the BIC signals 232 and 234 can be used by the satellite receiver device 100 to obtain navigation messages. Both signals 232 and 234 are provided as part of the open Beidou service and are free of charge and open to all users worldwide. Among others, these signals differ in that the B1I signal 232 is a legacy signal provided for compatibility with earlier versions of the Beidou GNSS, which is transmitted by the second generation of Beidou satellites, BDS-2, whereas the B1C signal 234 is a signal providing improved accuracy for more recent satellite receiver devices, which is transmitted by the third generation of Beidou satellites, BDS-3. Both signals are modulated using binary phase shift keying (BPSK). However, the code length of the B1I signal 232 is 2046 chips, whereas the code length of the B1C signal 234 is 10230 chips. In addition, the bandwidth of the respective signals differs, as indicated in Figure 2.

Further transmission channels in the lower bands 210 are used by the Beidou GNSS to provide further navigation messages, additional data components and/or restricted services. These comprise, for example, the so-called B2a signal 242, the so-called B2b signal 244 and the so-called B3 signal 246. Like the B1C signal 234, the B2a signal 242 and the B2b signal 244 are transmitted by the BDS-3 satellites. Other satellite systems, such as the GPS, GLONASS and Galileo system, comprise similar multichannel transmissions structures as also indicated in Figure 2.

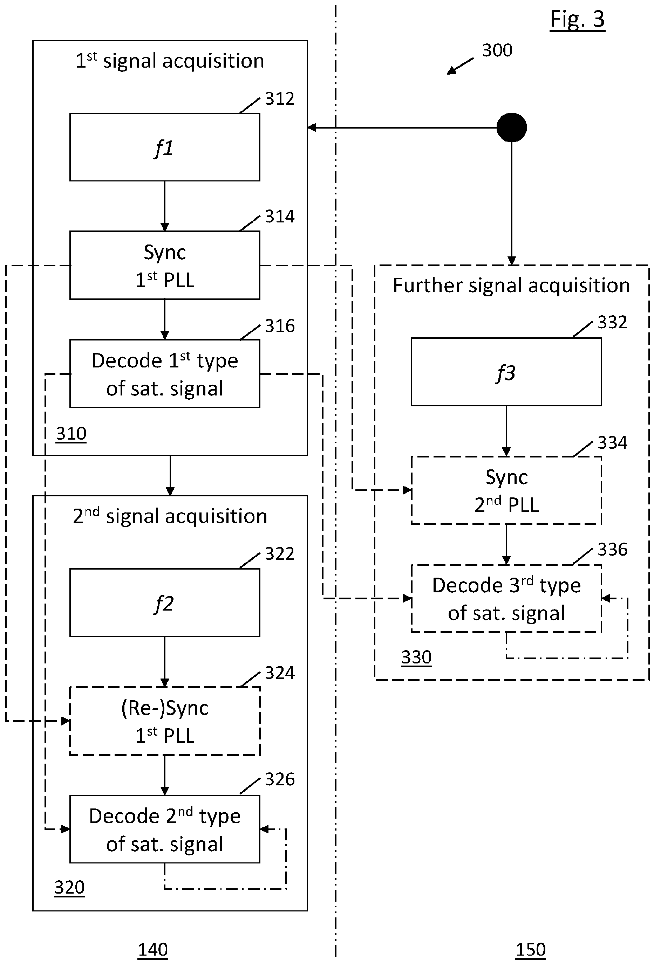

Figure 3 shows steps of a signal acquisition method 300 implemented, for example, by the satellite receiver device 100 explained above. As shown in Figure 3, the method 300 comprises a first signal acquisition block 310, a second signal acquisition block 320 and an optional further signal acquisition block 330.

As indicated in Figure 3, the first and second signal acquisition blocks 310 and 320 may be implemented by the same radio frequency reception path 140, whereas the further signal acquisition 330 may be implemented by an optional, second RF reception path 150. On a high level, the first signal acquisition block 310 obtains synchronization information and/or other auxiliary data, such as ephemeris data corresponding to a current orbit of a transmitting satellite. This information is then used by the second signal acquisition block 320 to accelerate signal acquisition of a second type of satellite signal. At least a part of the data obtained in the first signal acquisition block 310 may optionally also be used by the further signal acquisition block 330, as described in more detail below. Alternatively, though not shown in Figure 3, the first signal acquisition block 310 may be implemented by the radio frequency reception path 140, whereas the second signal acquisition block 320 may be implemented by the second RF reception path 150.

In the described example, the first signal acquisition block 310 is activated when the satellite receiver device 100 is first powered on, after the device 100 has lost a signal from a GNSS system, for example a vehicle based GNSS receiver driving through a long tunnel, or if a cold start is requested by a hardware or software component of the satellite receiver device 100. In such situations, the satellite receiver device 100 typically has no current information of its own position and/or the position of GNSS satellites in orbit. Furthermore, one or more RF components of the satellite receiver device 100, such as the PLLs 116 and 126, are not synchronized to a corresponding satellite signal of a respective satellite. In such a situation, it is particularly desirable to quickly synchronize at least one of the RF reception paths 140 and/or 150 with one or more satellite signals, allowing the satellite receiver device 100 to estimate its own position, i.e., achieve a low TTFF.

For this purpose, in step 312, the first receiver circuit 110 is configured with a first carrier frequency *f1*. In the described example, the carrier frequency *f1* corresponds to the carrier frequency of the B1I signal 232, i.e., 1561 MHz.

Thereafter, in a step 314, the first receiver circuit 110 tries to acquire a signal transmitted by a first set of GNSS satellites using the first carrier frequency *f1*. In particular, at this stage the first PLL 116 of the first receiver circuit 110 is synchronized to a phase of a signal transmitted by one or more satellites of a first set of satellites.

Once a RF circuit of the satellite receiver, for example the first RF circuit 110, is sufficiently synchronized, the satellite receiver device 100 starts to decode the received first type of satellite signal in step 316. Accordingly, the GNSS engine 136 may receive one or more first navigation messages. The first navigation messages may comprise, in particular, ephemeris data describing the current orbit of the transmitting GNSS satellite and optionally other auxiliary data.

In the described example, the satellite receiver device 100 tries to decode ephemeris data of at least four Beidou-3 satellites. When the ephemeris data of four BDS-3 satellites has been received, the first receiver circuit 110 is automatically switched to a different GNSS signal configuration and/or frequency, and no longer receives and decodes the B1I signal 234. However, the received ephemeris data and other relevant receiver data is retained in the satellite receiver device 100 and used for aiding and navigation and tracking in the second signal acquisition block 320.

Attention is drawn to the fact that this amount of first navigation messages and/or number of satellites is also sufficient to provide a first, potentially rough position of the satellite receiver device 100. Thus, a position output may optionally be generated in step 316 or a subsequent step on the basis of the acquired B1I signals 232 as soon as a position fix has been achieved by the GNSS engine 136. However, this output stops temporarily when the first receiver circuit 110 switches its configuration until it receives the second type of satellite signals, e.g., the B1C signal 234, in the second signal acquisition block 320 as described next.

In the described example, as soon as the GNSS engine 136 has received a sufficient amount of ephemeris data using the first RF reception path 140 for aiding signal acquisition and/or a positioning algorithm used in the second signal acquisition block 320, the method 300 proceeds to the second signal acquisition block 320 and reconfigures the first receiver circuit 110.

In particular, in step 322 the first receiver circuit 110 is configured with a second frequency f2. For example, the first demodulator 114 may be provided with a reference frequency of 1575.42 MHz instead of the previously used frequency of 1561 MHz in order to receive the B1C signal 234. Further, the first receiver circuit 110 will keep operating in the L1 band 222, also referred to as upper L band or E1 band, ranging from 1559 to 1610 MHz.

Attention is drawn once more to the fact that the signal B1I 232 and B1C 234 are transmitted by the same set of satellites, e.g., currently at least by the BDS-3 IGSO satellites. Accordingly, a fixed phase relationship between the two transmitted signals exists. In addition, both signals are transmitted at the same time from the same satellite, i.e., from the same position in orbit. Accordingly, at least some of the synchronization information obtained in step 314 may be reused in the second signal acquisition block 320. Similarly, ephemeris data, as well as other auxiliary information received in step 316, may be reused in the second signal acquisition block 320.

Accordingly, corresponding synchronization and receiving steps 324 and 326 in the second signal acquisition block 320 may take significantly less time or may be completely or partly omitted. For example, in step 324, the first PLL 116 may simply maintain its synchronization state with a signal transmitted by satellites of the first set of satellites.

Moreover, higher level information, such as a time, a position, and a satellite orbit of a transmitting satellited decoded by a positioning algorithm and/or the GNSS engine 136 based on navigation data received in step 316 may be provided as initial values for a subsequent execution of the positioning algorithm based on second navigation messages obtained in step 326. Thus, a few seconds after generating the first position output in step 316, the GNSS engine 136 will output further position fixes based on the B1C signal 234 and, optionally, other GNSS signals.

Attention is drawn to the fact that the second signal acquisition block 320 is typically performed in a continuous manner. In particular, as soon as the first receiver circuit 110 has entered a synchronized reception state, it continuously receives and decodes second navigation messages contained in the B1C signal 234.

To avoid a deadlock situation, the signal acquisition method 300 may also proceed from the first signal acquisition block 310 to the second signal acquisition block 320 when a timer expires without receiving ephemeris data of at least four Beidou-3 satellites and/or independent of a synchronization state of the first PLL 116. For example, this may be performed 30 to 60 seconds after entering of the first signal acquisition block 310. This may be useful in situations where a particular set of satellites, such as the BDS-3 IGSO satellites, are not visible. In this case, the satellite receiver device 100 may use other available GNSS satellites for positioning.

In the described example, the first signal acquisition block 310 with the steps 312 to 316 is only performed when a corresponding fast signal acquisition feature is enabled in the satellite receiver device 100 and/or the device 100 is configured to operate in a GNSS constellation that includes Beidou B1C satellites, e.g., BDS-3 satellites. In these circumstances, the satellite receiver device 100 will configure itself automatically to acquiring the Beidou B1I signal 232 when it starts up or a cold start is commanded.

As described with reference to Figure 1, the satellite receiver device 100 according to the described example has a second, independent RF reception path 150. The RF reception path 150 may be used to receive, in parallel, third navigation messages or other satellite signals using, for example using the B2a signal 242, the B2b signal 244 or the B3 signal 246 of the Beidou GNSS. Alternatively, the second RF reception path 150 may also be used to receive third navigation messages or other satellite signals from another GNSS system transmitted in the same or a different band. For example, the second receiver circuit 120 may be tuned to receive third navigation messages transmitted by the GPS, GLONASS or Galileo systems, e.g., for obtaining and interpolating positioning data obtained using two separate, independent GNSS.

Accordingly, in a step 332, the second receiver circuit 120 is tuned to a further, third carrier frequency *f3*. The carrier frequency *f3* may be 1176.45 MHz, 1207.14 MHz, or 1268.52 MHz of one of the satellite signals 242 to 446, respectively, arranged in a different band 210 or may be the same as the second frequency *f2*, e.g., 1575.42 MHz of the same band 222.

Such a further type of satellite signal may be transmitted by a different satellite and/or may be transmitted in a different frequency band. Accordingly, in a step 334, the second PLL 126 is synchronized with a respective signal source independent of the first PLL 116 in step 314, and corresponding navigation data is received in a step 336.

However, at least in the case that the signal is transmitted by the same set of satellites or a satellite of the same GNSS system for which ephemeris data has already been received in step 316, the signal acquisition in steps 334 and/or 336 can be accelerated by providing respective auxiliary data, such synchronization data and/or ephemeris data obtained in steps 314 and 316 as detailed above.

As discussed above with respect to the second signal acquisition block 320, the reception and decoding of the third navigation messages in step 336 may be performed in a continuous loop to provide continuous location updates based on the further type of satellite signals.

### List of references

- 100: satellite receiver device
- 102: first antenna pin
- 104: second antenna pin
- 106: I/O pin
- 110: first receiver circuit
- 112: first signal amplifier
- 114: first signal demodulator
- 116: first PLL
- 118: first ADC
- 120: second receiver circuit
- 122: second signal amplifier
- 124: second signal demodulator
- 126: second PLL
- 128: second ADC
- 130: digital signal processing part
- 132: first IFPP circuit
- 134: second IFPP circuit
- 136: GNSS engine
- 140: first RF reception path
- 150: second RF reception path
- 162: CPU
- 164: memory
- 166: interface circuit
- 168: bus system

- 200: frequency space
- 210: lower bands
- 212: L5 band
- 214: L2 band
- 220: upper bands
- 222: L1 band
- 232: B1I signal
- 234: B1C signal
- 242: B2a signal
- 244: B2b signal
- 246: B3 signal

- 300: signal acquisition method
- 310: first signal acquisition block
- 312 to 316: processing steps
- 320: second signal acquisition block
- 322 to 326: processing steps
- 330: further signal acquisition block
- 332 to 336: processing steps

## Claims

1. A method (300) for aiding acquisition of a satellite signal, comprising:
- configuring, during a first signal acquisition phase (310), a first radio frequency, RF, reception path (140) of a satellite receiver device (100) to receive a first type of satellite signal (232) broadcast by a first set of satellites using a first carrier frequency, wherein the first type of satellite signal (232) comprises ephemeris data of the first set of satellites; and
- configuring, during a second signal acquisition phase (320) based on synchronization information and/or the ephemeris data obtained in the first signal acquisition phase (310), the first RF reception path (140) to receive a second type of satellite signal (234) broadcast by the first set of satellites using a second carrier frequency.

2. The method of claim 1, further comprising:
- configuring a second RF reception path (150) to receive a further type of satellite signal (242, 244, 246) broadcast by the first or a second set of satellites using a further carrier frequency, wherein the second RF reception path (150) operates independently of the first RF reception path (140).

3. The method (300) of claim 2, wherein, if the further type of satellite signal (224, 244, 246) is broadcast by the first set of satellites, the synchronization information and/or the ephemeris data obtained in the first signal acquisition phase (310) is used by the second RF reception path (150) as it becomes available.

4. The method of any one of claims 1 to 3, wherein the first signal acquisition phase (310) ends when the first RF reception path (140) has successfully acquired the first type of satellite signal (232) and has received ephemeris data for at least a predetermined number of satellites.

5. The method (300) of any one of claims 1 to 4, further comprising:
- computing and outputting a first position output based on information contained in the first type of satellite signal (232) received in the first signal acquisition phase (310); and
- thereafter, continuously computing and outputting further position outputs based on information contained in at least one other type of satellite signal (234, 242, 244, 246) .

6. A satellite receiver device (100), comprising:
- a receiver circuit (110) configured to receive satellite signals (232, 234); and
- at least one processing device, configured to perform the following operations to aid signal acquisition:
- configure, during a first signal acquisition phase (310), the receiver circuit (110) to receive a first type of satellite signal (232) broadcast by a first set of satellites using a first carrier frequency, wherein the first type of satellite signal (232) comprises ephemeris data of the first set of satellites; and
- configure, during a second signal acquisition phase (320) based on synchronization information and/or the ephemeris data obtained in the first signal acquisition phase (310), the receiver circuit (110) to receive a second type of satellite signal (234) broadcast by the first set of satellites using a second carrier frequency.

7. The satellite receiver device (100) of claim 6, wherein
- the at least one processing device is configured to store the synchronization information and/or the ephemeris data obtained in the first signal acquisition phase (310) for use in the second signal acquisition phase (320); and/or
- the receiver circuit (110) is configured to maintain a synchronization state, in particular of a phase-locked loop, PLL (116), acquired in the first signal acquisition phase (310) for the second signal acquisition phase.

8. The satellite receiver device (100) of claim 6 or 7, wherein the at least one processing device is configured to switch the receiver circuit (110) from the first carrier frequency to the second carrier frequency when the receiver circuit (110) has acquired the first type of satellite signal (232) and the satellite receiver device (100) has received ephemeris data for a predetermined number of satellites.

9. The satellite receiver device (100) of any one of claims 6 to 8, wherein the at least one processing device is further configured to switch the receiver circuit (110) from the first carrier frequency to the second carrier frequency after a predetermined amount of time regardless of its synchronization state.

10. The satellite receiver device (100) of any one of claims 6 to 9, wherein the at least one processing device is configured to implement a positioning engine, and the step of configuring the receiver circuit (110) to receive the second type of satellite signal (234) is performed when the positioning engine obtains at least time, position and satellite orbit data, and the positioning engine uses the time, position and satellite orbit data obtained in the first signal acquisition phase (310) during the second signal acquisition phase (320).

11. The satellite receiver device (100) of any one of claims 6 to 10, wherein
- the satellite receiver device (100) is a two-band receiver,
- a first receiver circuit (110) of the two-band receiver is configured by the at least one processing device to successively receive the first type of satellite signal (232) and the second type of satellite signal (234), the first type of satellite signal (232) and the second type of satellite signal (234) being broadcast by the first set of satellites in a first transmission band (222); and
- a second receiver circuit (120) of the two-band receiver is configured by the at least one processing device to independently receive a further type of satellite signal (242, 244, 246) broadcast by the first or a second set of satellites using a further carrier frequency of the first transmission band (222) or a second transmission band (212, 214).

12. The method (300) or the satellite receiver device (100) of any one of claims 1 to 11, wherein the first type of satellite signal (232) has a lower code length than the second type of satellite signal (234).

13. The method (300) or the satellite receiver device (100) of any one of claims 1 to 12, wherein
- the first type of satellite signal (232) comprises a first navigation data stream of a global navigation satellite system, GNSS; and
- the second type of satellite signal (234) comprises a second navigation data stream of the GNSS.

14. The method (300) or satellite receiver device (100) of claim 13, wherein the GNSS is configured to provide regional coverage using at least one satellite in a geostationary earth orbit, GEO, and/or in an inclined geo-synchronous orbit, IGSO, in particular the Beidou navigation satellite system.

15. The method (300) or satellite receiver device (100) of any one of claims 1 to 14, wherein the first and second signal acquisition phases (310, 320) are performed when the satellite receiver device (100) is powered on, after a request for a cold start and/or during signal re-acquisition.
